# EUROPÄISCHE PATENTANMELDUNG

(11) **EP 2 626 601 A1**
(43) Veröffentlichungstag der Anmeldung: **14.08.2013**
(21) Anmeldenummer: 12154864.8
(22) Anmeldetag: 10.02.2012
(51) Int. Cl.: F16J 15/32

(54) **Dichtungsanordnung für eine Turbomaschine**

(71) Anmelder: Siemens Aktiengesellschaft, 80333 München (DE)
(72) Erfinder: Flegler, Johan, 45131 Essen (DE); Graßmann, Arne, 45259 Essen (DE); Hemmelmann, Carsten, 45472 Mülheim (DE); Rolnik, Christoph, 45141 Essen (DE); Skorka, Peter, 45326 Essen (DE); von der Bey, Willi, 45478 Mülheim an der Ruhr (DE)

(57) **Zusammenfassung**

Die Erfindung betrifft eine Dichtungsanordnung (10) für eine Turbomaschine, wobei ein Spalt zwischen einem Stator (11) und einem Rotor abgedichtet werden soll, wobei der Stator (11) eine Nut (2) umfasst und in dieser Nut (2) ein Bürstendichtungssegment (12) angeordnet ist, wobei zwischen der Nut (2) und dem Bürstendichtungssegment (12) ein U-förmiges Blech (4) und zwischen dem U-förmigen Blech (4) und dem Bürstendichtungssegment (12) ein Stemmdraht (5) angeordnet ist.

## Beschreibung

Die Erfindung betrifft eine Dichtungsanordnung für eine Turbomaschine, zur Abdichtung eines umlaufenden Spaltes zwischen einem Rotor und einem Stator, wobei der Stator ein Dichtelement mit einer umlaufenden Nut zur Aufnahme eines Bürstendichtungssegmentes aufweist, wobei das Bürstendichtungssegment mehrere Borsten aufweist, die aus der jeweiligen Nut herausragen und an dem Rotor anliegen, wobei ein U-förmiges Blech in der Nut angeordnet ist und zum Halten des Bürstendichtungssegments ausgebildet ist.

Turbomaschinen wie z. B. Dampfturbinen oder Gasturbinen bestehen aus mehreren Baugruppen, bei denen es sich im Wesentlichen um ein feststehendes Bauteil und ein rotierendes Bauteil handelt. Das feststehende Bauteil wird häufig Stator und das rotierende Bauteil Rotor genannt. Bei dem Stator handelt es sich um ein feststehendes Gehäuse, dem Leitschaufeln zugeordnet sind. Dem Rotor sind üblicherweise Laufschaufeln zugeordnet, die sich zusammen mit dem Rotor gegenüber den feststehenden Leitschaufeln sowie dem feststehenden Gehäuse drehen.

Um einen möglichst hohen Wirkungsgrad zu erreichen, sollten die Leckageströme zwischen den relativ zueinander angeordneten Bauteilen minimal sein. Dazu werden Dichtungsanordnungen zur Abdichtung eines Spalts zwischen relativ zueinander rotierenden Bauteilen eingesetzt. Bewährt haben sich hier die sogenannten Bürstendichtungen, die über mehrere drahtartige Borsten verfügen, die an einem Borstenträger fixiert sind. Solche Bürstendichtungen werden in der Regel in einem Bauteil in eine Nut integriert, wobei die freien Enden der Borsten aus der Nut herausragen und einen Spalt zu einem anderen Bauteil abdichten.

In der Regel werden die Bürstendichtungen mittels eines Formschlusses mit dem Bauteil verbunden. Es kommt allerdings vor, dass der Formschluss nicht die geforderte Güte aufweist, so dass es zu Spielunterschreitungen zwischen der Bürstendichtung und dem Rotor kommen kann.

Die EP 1 848 905 B1 schlägt daher vor, die Bürstendichtungen mit Gewindestiften zu halten, wobei ein entsprechender Bauraum für die Verschraubung vorhanden sein muss. Des Weiteren wird in der EP 1 848 905 B1 vorgeschlagen, die Bürstendichtungen in eine hinterschneidungslose Nut einzulegen und mittels einer Schraube zu verstemmen.

Die DE 100 18 273 B4 schlägt vor, geschweißte Bürstendichtungen mit eingearbeiteten Stützplatten und ggf. Schutzplatten auszubilden.

In der DE 101 63 804 B4 wird eine Stützplatte als selbstständiges Stemmglied mit eingebaut, wobei hier nachteilig ist, dass eine Breite der erforderlichen Nut einen Einbau in beengten Bereichen einer Turbomaschine erschwert bzw. unmöglich macht.

Die DE 600 20 884 T2 zeigt eine Bürstendichtung, die derart befestigt ist, dass ein Bürstenelement mittels eines Stemmdrahtes in einer hinterschneidungslosen Nut gehalten wird. Dabei ist die Stützplatte der Bürstendichtung integral ausgeführt, d. h. sie ist Bestandteil der umgebenden Geometrie.

Hierzu ist in der DE 10 2004 025 142 B4 ein ähnliches Prinzip offenbart, in dem ein Aufbau gezeigt wird, der zusätzliche Bleche aufweist, die eingebracht sind.

Die EP 0 905 421 A1 offenbart eine Bürstendichtung, in der Formelemente genutzt werden, um die Bürstendichtung zu fixieren und eine Stützplatte ausgebildet wird, wobei eine hinterschnittene Nut vorausgesetzt ist.

Es ist Aufgabe der Erfindung eine verbesserte Dichtungsanordnung anzugeben.

Gelöst wird diese Aufgabe durch eine Dichtungsanordnung für eine Turbomaschine, zur Abdichtung eines umlaufenden Spaltes zwischen einem Rotor und einem Stator, wobei der Stator ein Dichtelement mit einer umlaufenden Nut zur Aufnahme eines Bürstendichtungssegmentes aufweist, wobei das Bürstendichtungssegment mehrere Borsten aufweist, die aus der jeweiligen Nut herausragen und an dem Rotor anliegen, wobei ein U-förmiges Blech in der Nut angeordnet und zum Halten des Bürstendichtungssegmentes ausgebildet ist, wobei das U-förmige Blech mittels eines Stemmdrahtes in die Nut eingepresst ist.

Mit der Erfindung wird vorteilhaft vorgeschlagen, dass durch die Verstemmung mit einem Stemmdraht ein Pressverband entsteht, bei dem der Formschluss zwischen dem U-förmigen Blech und der Nut garantiert ist. Des Weiteren offenbart die Erfindung den Vorteil, dass die Nut aufgrund der einfachen Geometrie zunächst ohne Hinterschneidung mit Standardwerkzeugen ohne großen Aufwand gefertigt werden kann. Außerdem besteht nach dem Verstemmen des U-förmigen Blechs die Möglichkeit, die einzelnen Schenkel mechanisch zu bearbeiten und so deren Längen exakt einzustellen. Vorteilhaft ist es hierbei, dass das Bürstendichtungssegment selbst noch nicht montiert ist, sondern erst nach erfolgter Einstellung der Höhe der Schenkel des U-förmigen Blechs das Bürstendichtungssegment montiert wird. Eine Beschädigung der Borsten kann somit ausgeschlossen werden.

Ein weiterer Vorteil ist, dass gegenüber einer Nut mit Hinterschneidung das Entfernen des Bürstenelementes und des U-förmigen Bleches aus der Nut vereinfacht ist.

Das U-förmige Blech wird mittels eines Stemmdrahtes formschlüssig in die Nut eingepresst, wobei der Stemmdraht innerhalb des U-förmigen Bleches angeordnet ist.

Vorteilhafte Weiterbildungen sind in den Unteransprüchen angegeben.

So wird in einer ersten vorteilhaften Weiterbildung das U-förmige Blech derart ausgebildet, dass jenes einen ersten Schenkel und einen zweiten Schenkel aufweist, wobei der erste Schenkel länger als der zweite Schenkel und zum Stützen der Borsten ausgebildet ist.

In einer weiteren vorteilhaften Weiterbildung ist der zweite Schenkel mit einer Abschlusskante ausgeführt, die wenigstens abschnittsweise zum Bürstendichtungssegment geknickt ausgeführt ist. Dies führt dazu, dass das Bürstendichtungssegment eine weitere Möglichkeit erhält, in der Nut verbessert gehalten zu werden.

In einer vorteilhaften Weiterbildung ist der zweite Schenkel im Wesentlichen gleichlang wie der erste Schenkel ausgeführt. Dies führt dazu, dass, sofern der zweite Schenkel stromauf angeordnet ist, die Borsten weiter geschützt werden können. Ebenso vorteilhafte Weise kann der zweite Schenkel eine Länge von 50% bis 80% der Länge des ersten Schenkels aufweisen, wodurch auch hier eine Schutzfunktion für die Borsten erzielt werden kann.

Ebenso vorteilhaft kann der zweite Schenkel derart ausgeführt werden, dass er einen Knick aufweist, der zum Bürstendichtungssegment zeigt und dadurch eine weitere mechanische Kraft auf die Bürstendichtungssegmente ausübt.

Vorteilhafterweise ist der Stemmdraht im Querschnitt gesehen rechteckförmig ausgebildet. Somit wird eine optimale Flächenpressung erreicht, da die geometrische Form des Stemmdrahtes im Wesentlichen der geometrischen Form der Nut entspricht.

Vorteilhafterweise weist die Nut eine Hinterschneidung auf, wobei der zweite Schenkel in der Hinterschneidung ausgeführt ist. Durch eine Hinterschneidung ist eine weitere mechanische Kraft ausübbar, die ein Herauslösen der Bürstendichtung aus der Nut wirksam verhindert. Vorteilhafterweise wird zwischen dem U-förmigen Blech und der Nut ein weiteres erstes L-förmige Blech angeordnet. Durch die Hinzunahme des L-förmigen Bleches ist eine einfache Möglichkeit angegeben, die Bürstendichtung durch eine Schützplatte vor der Anströmung derart zu schützen, dass die Borsten in geringerem Maße zu Schwingungen angeregt werden.

In einer weiteren vorteilhaften Weiterbildung wird ein zweites L-förmiges Blech vorgesehen, das zwischen dem Stemmdraht und dem U-förmigen Blech angeordnet ist.

Im Folgenden wird eine bevorzugte Ausführungsform einer bevorzugten Dichtungsanordnung anhand der beigefügten schematischen Zeichnungen erläutert. Es zeigen:
- Figur 1: eine erste Ausführungsform einer erfindungsgemäßen Dichtungsanordnung;
- Figur 2: eine zweite Ausführungsform der erfindungsgemäßen Dichtungsanordnung;
- Figur 3: eine dritte Ausführungsform der erfindungsgemäßen Dichtungsanordnung;
- Figur 4: Darstellung der erfindungsgemäßen Dichtungsanordnung ohne Bürstensegment;
- Figur 5: erfindungsgemäße Anordnung mit Hinterschneidung;
- Figur 6: weitere Ausführungsform mit zusätzlichem L-Blech;
- Figur 7: Darstellung der weiteren Ausführungsform ohne Bürstensegment;
- Figur 8: Darstellung der weiteren Ausführungsform mit Hinterschneidung;
- Figur 9: alternative Ausführung zur erweiterten Darstellung mit anderer Anordnung des L-Blechs.

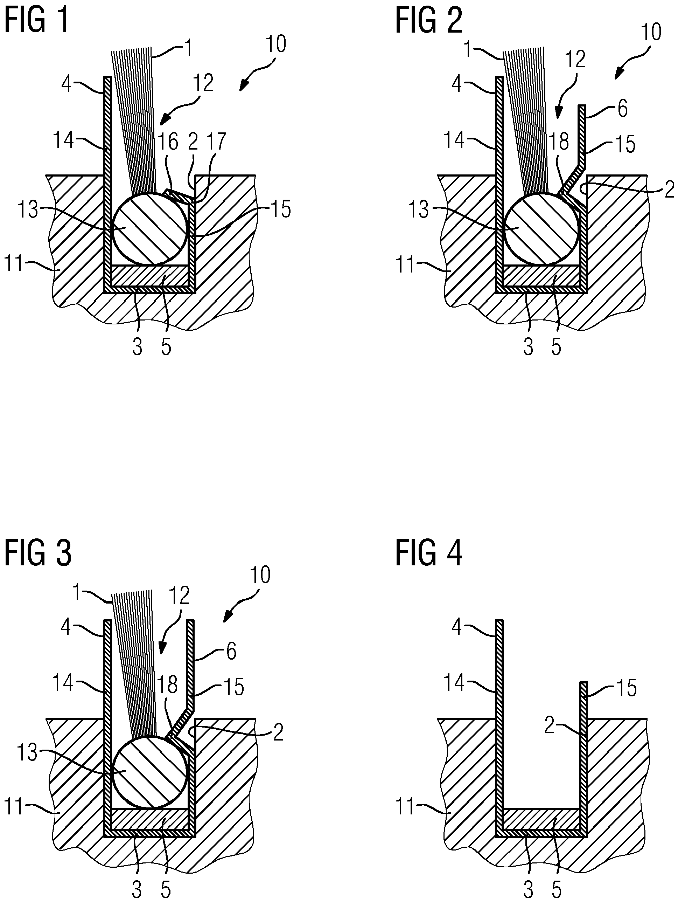

Die Figur 1 zeigt eine Dichtungsanordnung 10 für eine Turbomaschine, die nicht näher dargestellt ist. Die Turbomaschine kann beispielsweise eine Dampfturbine, eine Gasturbine oder ein Verdichter sein. Die Dichtungsanordnung 10 ist in einem Stator 11 angeordnet, der beispielsweise ein feststehendes Bauteil, z. B. ein Leitschaufelträger einer Turbomaschine sein kann. Die Dichtungsanordnung 10 umfasst ein Bürstendichtungssegment 12. Im Wesentlichen umfasst das Bürstendichtungssegment 12 mehrere Borsten 1, die an einem Borstenträger 13 fixiert sind. In diesem Borstenträger 13 können die Enden der Borsten 1 miteinander gewickelt oder geschweißt sein. Im Borstenträger 13 werden die Borsten zusammengehalten. Die Borsten 1 sind flexibel und können im Betrieb an einem gegenüberliegenden Bauteil berührend angeordnet sein. Die Dichtungsanordnung 10 ist zur Abdichtung eines nicht näher dargestellten umlaufenden Spaltes zwischen einem nicht näher dargestellten Rotor und dem Stator 11 dargestellt. Der Stator 11 weist eine Nut 2 auf, in der das Bürstendichtungssegment 12 angeordnet ist. Die Nut 2 ist in der gemäß Figur 1 dargestellten Ausführungsform hinterschneidungslos ausgeführt. Der Stator 11 ist hierbei derart ausgeführt, dass die umlaufende Nut 2 zur Aufnahme eines Bürstendichtungssegmentes 12 ausgebildet ist. Die Nut 2 kann in einem Dichtelement (nicht dargestellt) angeordnet sein. Dieses Dichtelement kann an dem Stator 11 befestigt sein. Somit muss in einem Schadensfall nicht der gesamte Stator 11 ausgetauscht werden, sondern lediglich das Dichtelement.

In der Nut 2 ist ein U-förmiges Blech 4 angeordnet und zum Halten des Bürstendichtungssegmentes 12 ausgebildet. Das U-förmige Blech 4 zeichnet sich dadurch aus, dass ein Stemmdraht 5 zwischen dem Borstenträger 13 und der Nut 2 derart eingepresst ist, dass das Bürstendichtungssegment 12 formschlüssig mit dem Stator 11 verbunden ist.

Das U-förmige Blech 4 weist einen ersten Schenkel 14, einen zweiten Schenkel 15 und einen unteren Schenkel 3 auf. Der erste Schenkel 14, der untere Schenkel 3 und der zweite Schenkel 15 sind zu einem U ausgebildet, wobei der zweite Schenkel 15 kürzer ausgeführt werden kann als der erste Schenkel 14. Des Weiteren weist der zweite Schenkel 15 eine Abschlusskante 16 auf, die einen Knick 17 aufweist, wobei sich die Abschlusskante 16 zum Borstenträger 13 neigt und dadurch eine weitere mechanische Kraft ausübt.

Die Figur 2 zeigt eine weitere Ausführungsform der Dichtungsanordnung 10. Der Unterschied zur Figur 1 ist, dass das U-förmige Blech einen gegenüber dem U-förmigen Blech 4 in der in Figur 1 gezeigten Ausführung einen längeren zweiten Schenkel 15 aufweist, der dadurch als eine Stützplatte 6 ausgeführt werden kann. Des Weiteren weist der zweite Schenkel 15 einen zweiten Knick 18 auf, der ebenfalls zum Borstenträger 13 neigt. Die Stützplatte 6 weist hierbei eine Länge von 50% bis 80% der Länge des ersten Schenkels 14 auf.

In Figur 3 wird eine weitere Ausführungsform der Dichtungsanordnung 10 gezeigt. Der Unterschied hierbei ist, dass der zweite Schenkel 15 nunmehr im Wesentlichen die gleiche Länge aufweist wie der erste Schenkel 14. Im Betrieb kann der zweite Schenkel 15 stromaufwärts angeordnet sein. Das bedeutet, dass eine Strömung von rechts nach links erfolgt und diese durch den zweiten Schenkel 15 an ein direktes Auftreffen auf die Borsten 1 gehindert ist. Dadurch werden Schwingungen der Borsten 1 wirksam vermieden.

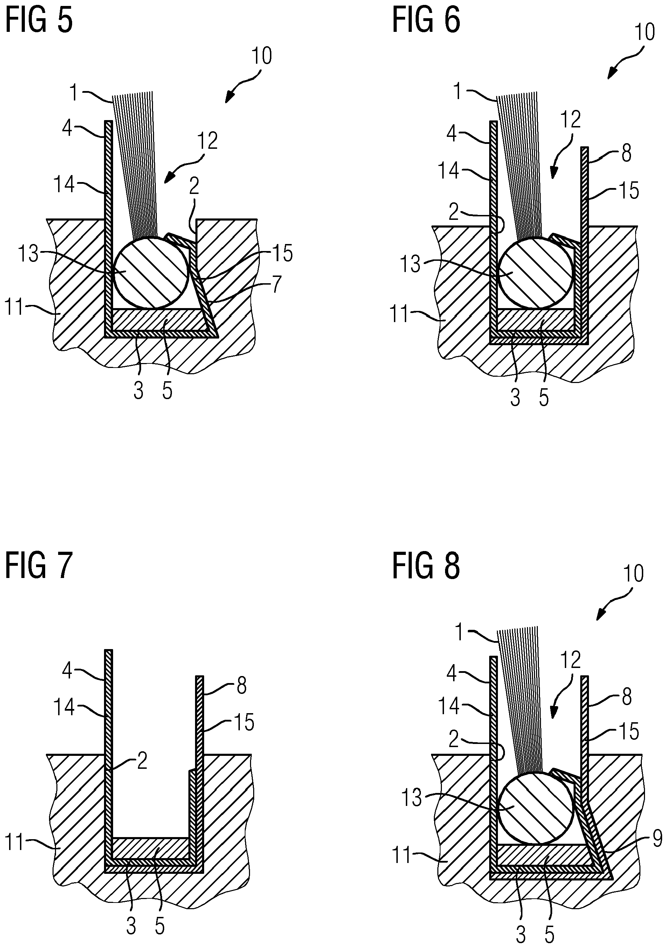

In Figur 4 ist eine Darstellung zu sehen, die kurz vor dem Einbau des Bürstendichtungssegmentes 12 erfolgt. Erfindungsgemäß kann der erste Schenkel 14 und der zweite Schenkel 15 in diesem Zustand mechanisch hervorragend bearbeitet werden. Die Figur 5 zeigt eine weitere Ausführungsform der Dichtungsanordnung 12. Der Unterschied ist hierbei, dass die Nut 2 eine Hinterschneidung 7 aufweist. Die Hinterschneidung 7 ist am zweiten Schenkel 15 angeordnet, wobei der Stemmdraht 5 an die geometrische Form der Hinterschneidung 7 angepasst ist. Allerdings ist in dieser Ausführungsform ein Herausnehmen der Dichtungsanordnung 10 aus der Nut 2 erschwert.

Die Figur 6 zeigt eine weitere Ausführungsform der Dichtungsanordnung 10. Es wird hierbei ein weiteres Bauelement eingesetzt, und zwar ein L-förmiges Blech 8, das zwischen der Nut 2 und dem U-förmigen Blech 4 angeordnet ist. Dieses L-förmige Blech 8 kann die Funktion der Stützplatte 6 übernehmen und stromaufwärts angeordnet sein. Das bedeutet, dass der zweite Schenkel 15 des U-förmigen Bleches 4 nicht so lang ausgeführt werden muss wie der erste Schenkel 14 des U-förmigen Bleches.

Die Figur 7 zeigt eine Darstellung der weiteren Ausführungsform gemäß Figur 6 vor dem Einbau des Bürstendichtungssegments 12.

Die Figur 8 zeigt eine weitere Ausführungsform der Dichtungsanordnung 10, wobei hier ähnlich zur Figur 5 die Nut 2 eine Hinterschneidung 9 aufweist. Die Hinterschneidung 9 ist hierbei wiederum an dem zweiten Schenkel 15 angeordnet und verhindert so ein Herauslösen des U-förmigen Bleches 4 sowie der gesamten Dichtungsanordnung 10 aus der Nut 2.

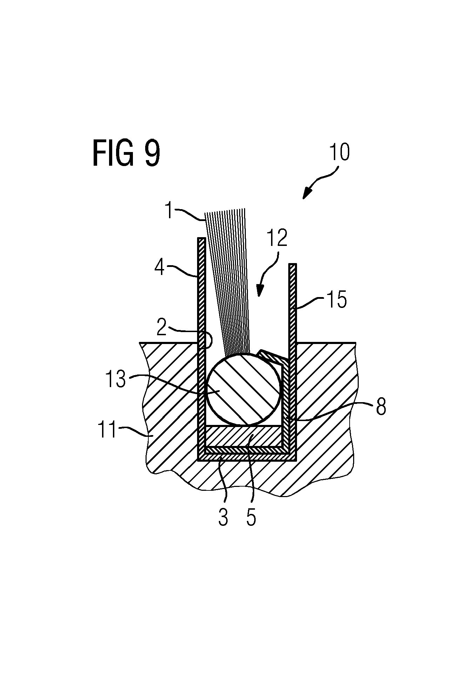

Eine weitere Ausführungsform der Dichtungsanordnung 10 ist in der Figur 9 gezeigt. Der Unterschied hierbei ist der, dass das L-förmige Blech 8 als zusätzliches Bauteil weiterhin verwendet wird und zwischen dem Stemmdraht 5 und dem U-förmigen Blech 4 angeordnet ist. Ein weiterer Unterschied besteht darin, dass das L-förmige Blech 8 den Knick aufweist, den vorher der zweite Schenkel 15 des U-förmigen Bleches 4 aufgewiesen hatte.

## Patentansprüche

1. Dichtungsanordnung (10) für eine Turbomaschine,
zur Abdichtung eines umlaufenden Spaltes zwischen einem Rotor und einem Stator (11),
wobei der Stator (11) ein Dichtelement mit einer umlaufenden Nut (2) zur Aufnahme eines Bürstendichtungssegmentes (12) aufweist,
wobei das Bürstendichtungssegment (12) mehrere Borsten (1) aufweist, die aus der jeweiligen Nut (2) herausragen und an dem Rotor anliegen,
wobei ein U-förmiges Blech (4) in der Nut (2) angeordnet ist und zum Halten des Bürstendichtungssegments (12) ausgebildet ist,
**dadurch gekennzeichnet, dass**
das U-förmige Blech (4) mittels eines Stemmdrahtes (5) in die Nut (2) eingepresst ist.

2. Dichtungsanordnung (10) nach Anspruch 1,
wobei das U-förmige Blech (4) einen ersten Schenkel (14) und einen zweiten Schenkel (15) aufweist,
wobei der erste Schenkel (14) länger als der zweite Schenkel (15) ausgebildet ist und zum Stützen der Borsten (1) ausgebildet ist.

3. Dichtungsanordnung (10) nach Anspruch 1 oder 2,
wobei der Stemmdraht (5) zwischen dem Bürstendichtungssegment (12) und dem U-förmigen Blech (4) angeordnet ist.

4. Dichtungsanordnung (10) nach Anspruch 1, 2 oder 3, wobei der zweite Schenkel (15) eine Abschlusskante (16) aufweist, die zum Bürstendichtungssegment (12) geknickt ausgeführt ist.

5. Dichtungsanordnung (10) nach einem der vorhergehenden Ansprüche,
wobei der zweite Schenkel (15) im Wesentlichen gleichlang ist wie der erste Schenkel (14).

6. Dichtungsanordnung (10) nach Anspruch 5,
wobei der zweite Schenkel (15) einen zum Bürstendichtungssegment (12) zeigenden Knick (17, 18) aufweist.

7. Dichtungsanordnung (10) nach einem der vorhergehenden Ansprüche,
wobei der zweite Schenkel (15) eine Länge von 50% bis 80% der Länge des ersten Schenkels (14) aufweist.

8. Dichtungsanordnung (10) nach einem der vorhergehenden Ansprüche,
wobei der Stemmdraht (5) im Querschnitt gesehen rechteckförmig ausgebildet ist.

9. Dichtungsanordnung (10) nach einem der vorhergehenden Ansprüche,
wobei die Nut (2) eine Hinterschneidung (7) aufweist und der zweite Schenkel (15) in der Hinterschneidung (7) angeordnet ist.

10. Dichtungsanordnung (10) nach einem der Ansprüche 1 bis 8,
wobei die Nut (2) hinterschneidungslos ausgeführt ist.

11. Dichtungsanordnung (10) nach einem der vorhergehenden Ansprüche,
wobei ein weiteres erstes L-förmiges Blech (8) zwischen dem U-förmigen Blech (4) und der Nut (2) angeordnet ist.

12. Dichtungsanordnung (10) nach einem der vorhergehenden Ansprüche,
wobei ein zweites L-förmiges Blech (8) zwischen dem Stemmdraht (5) und dem U-förmigen Blech (4) angeordnet ist.
